# EUROPEAN PATENT APPLICATION

(11) **EP 4 484 373 A1**
(43) Date of publication of application: **01.01.2025**
(21) Application number: 23760121.6
(22) Date of filing: 24.02.2023
(51) Int. Cl.: C01B 32/168, H01B 13/00, H01M 4/13, H01M 4/139, H01M 4/62

(54) **METHOD FOR PRODUCING CARBON NANOTUBE DISPERSION, NEGATIVE-ELECTRODE MIX FOR SECONDARY BATTERY, AND SECONDARY BATTERY**

(30) Priority: 24.02.2022 JP 2022026858
(71) Applicant: Panasonic Energy Co., Ltd., Osaka 570-8511 (JP); Panasonic Holdings Corporation, Osaka 571-8501 (JP)
(72) Inventor: YOKOYAMA, Yuji, Kadoma-shi, Osaka 571-0057 (JP); HIRANO, Nobuhiro, Kadoma-shi, Osaka 571-0057 (JP); SUGIMORI, Masanori, Kadoma-shi, Osaka 571-0057 (JP); KOMI, Satoshi, Kadoma-shi, Osaka 571-0057 (JP)
(74) Representative: Novagraaf International SA
(86) International application number: PCT/JP2023/006828
(87) International publication number: WO 2023/163123

(57) **Abstract**

A method for producing a carbon nanotube dispersion D, the method comprising performing a first treatment, in which a liquid mixture M comprising carbon nanotubes and a solvent is passed through a valve-type homogenizer 6 regulated so as to have a first valve opening degree, and a second treatment, in which the liquid mixture having undergone the first treatment is passed through the valve-type homogenizer 6 regulated so as to have a second valve opening degree, which is narrower than the first valve opening degree.

## Description

### TECHNICAL FIELD

The present disclosure relates to a method for producing a carbon nanotube dispersion liquid, a negative electrode mixture for a secondary battery, and a secondary battery.

### BACKGROUND ART

It has been conventionally known to add carbon nanotubes to a negative electrode mixture for lithium-based batteries, including lithium ion batteries and lithium secondary batteries (lithium metal secondary batteries) (see Patent Literature 1, for example). The addition of carbon nanotubes to the negative electrode mixture can suppress the loss of conductive paths caused by repeated charging and discharging of the secondary battery.

### RELATED-ART LITERATURE

### PATENT LITERATURE

Patent Literature 1: Japanese Unexamined Patent Application Publication No. 2011-076744

### SUMMARY OF INVENTION

### TECHNICAL PROBLEM

In order to maintain the conductive paths in the negative electrode and improve the cycle characteristics of the secondary battery, the carbon nanotubes may desirably be dispersed in a state where each carbon nanotube has a high aspect ratio, i.e., an elongated shape, in the negative electrode mixture.

The present disclosure has been made in view of such a situation, and a purpose thereof is to provide a technology for obtaining a carbon nanotube dispersion liquid suitable for maintaining conductive paths in an electrode.

### SOLUTION TO PROBLEM

One embodiment of the present disclosure is a method for producing a carbon nanotube dispersion liquid. The method for producing includes performing: a first process of allowing a mixture liquid of a carbon nanotube and a solvent to pass through a valve-type homogenizer adjusted to a first valve opening degree; and a second process of allowing the mixture liquid that has been subjected to the first process to pass through the valve-type homogenizer adjusted to a second valve opening degree narrower than the first valve opening degree.

Another embodiment of the present disclosure is a negative electrode mixture for a secondary battery. The negative electrode mixture includes a negative electrode active material, and a carbon nanotube dispersion liquid produced using the method for producing a carbon nanotube dispersion liquid according to the aforementioned embodiment.

Yet another embodiment of the present disclosure is a secondary battery. The secondary battery includes a negative electrode that includes the negative electrode mixture for a secondary battery according to the aforementioned embodiment.

Optional combinations of the aforementioned constituting elements, and implementation of the present disclosure in the form of methods, apparatuses, or systems may also be practiced as additional modes of the present disclosure.

### ADVANTAGEOUS EFFECTS OF INVENTION

According to the present disclosure, a carbon nanotube dispersion liquid suitable for maintaining conductive paths in an electrode can be obtained.

### BRIEF DESCRIPTION OF DRAWINGS

[Fig. 1] Fig. 1 is a schematic diagram of a production device for a carbon nanotube dispersion liquid according to an embodiment.
[Figs. 2] Fig. 2A and Fig. 2B are schematic diagrams of a valve-type homogenizer.
[Fig. 3] Fig. 3 is a sectional view of a secondary battery.

### DESCRIPTION OF EMBODIMENTS

In the following, the present disclosure will be described based on a preferred embodiment with reference to the drawings. The embodiment is intended to be illustrative only and not to limit the present disclosure, so that it should be understood that not all of the features or combinations thereof described in the embodiment are necessarily essential to the present disclosure. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. Also, when the terms "first", "second", and the like are used in the present specification or claims, such terms do not imply any order or degree of importance and are used to distinguish one configuration from another, unless otherwise specified. Further, in each drawing, part of a member less important in describing the embodiment may be omitted.

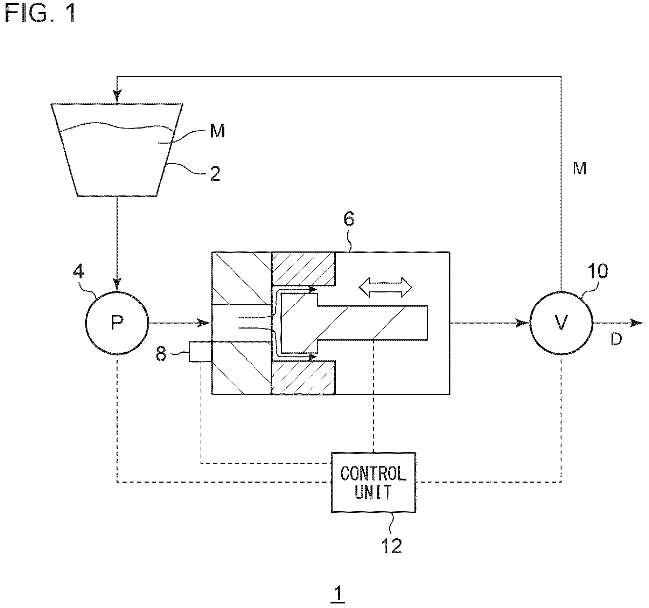

Fig. 1 is a schematic diagram of a production device 1 for a carbon nanotube dispersion liquid D according to an embodiment. In Fig. 1, some of the constituting elements of the device are illustrated as functional blocks. Each of the functional blocks may be implemented by an element such as a CPU or memory of a computer or by a circuit as a hardware configuration, and by a computer program or the like as a software configuration. It will be understood by those skilled in the art that these functional blocks may be implemented in a variety of forms by combinations of hardware and software.

The production device 1 for the carbon nanotube dispersion liquid D (hereinafter, simply referred to as the production device 1 as appropriate) includes a tank 2, a pump 4, a valve-type homogenizer 6, a sensor 8, a flow path switching valve 10, and a control unit 12.

The tank 2 stores a mixture liquid M of carbon nanotubes and a solvent. The carbon nanotubes may be single-layer or multi-layer. In the mixture liquid M that has not passed through the valve-type homogenizer 6, at least some of the carbon nanotubes are aggregated. The solvent may be water, for example. The mixture liquid M may contain a dispersant.

To the tank 2, the pump 4 is connected via a pipe. For the pump 4, a publicly-known pump such as a plunger pump may be used. To the pump 4, the valve-type homogenizer 6 is connected via a pipe. For the valve-type homogenizer 6, a publicly-known homogenizer such as a valve-type highpressure homogenizer may be used. By driving the pump 4, the mixture liquid M stored in the tank 2 is supplied to the valve-type homogenizer 6.

In the valve-type homogenizer 6, the sensor 8 is provided to detect the state of the mixture liquid M passing through the valve-type homogenizer 6. The sensor 8 detects, for example, the pressure applied to the mixture liquid M passing through the valve-type homogenizer 6. The sensor 8 transmits a signal indicating the detection result to the control unit 12. The arrangement of the sensor 8, in other words, the position at which the sensor 8 detects or measures the pressure applied to the mixture liquid M can be set as appropriate. For example, the sensor 8 may detect the pressure applied to the mixture liquid M at a position between the pump 4 and the valve-type homogenizer 6. Also in this case, the pressure applied to the mixture liquid M passing through the valve-type homogenizer 6 can be ascertained. To the valve-type homogenizer 6, the flow path switching valve 10 is connected via a pipe. The flow path switching valve 10 is also connected to the tank 2 and to a downstream device (not illustrated) via pipes. The flow path switching valve 10 can mutually switch the connection destination of the valve-type homogenizer 6 between the tank 2 and the downstream device.

The control unit 12 can be constituted by a digital processor. For example, the control unit 12 may be constituted by a combination of a microcontroller, including a CPU, and a software program or may be constituted by an FPGA (Field Programmable Gate Array) or an ASIC (Application Specified IC). The control unit 12 operates when the integrated circuit constituting itself executes a program retained in the memory. The control unit 12 drives the pump 4, adjusts the valve-type homogenizer 6, and switches the flow path switching valve 10, for example.

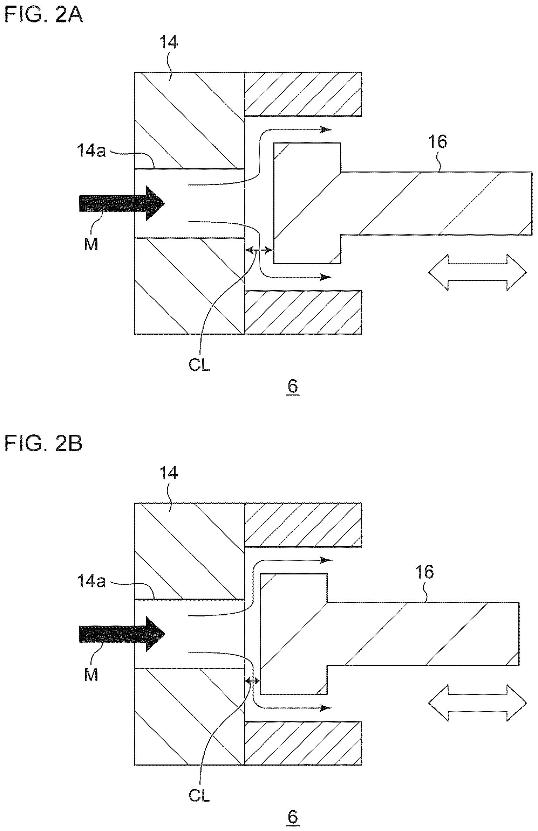

Fig. 2A and Fig. 2B are schematic diagrams of the valve-type homogenizer 6. As shown in Fig. 2A and Fig. 2B, the valve-type homogenizer 6 includes a valve seat 14 and a valve 16. In the valve seat 14, a through hole 14a through which the mixture liquid M passes is provided. The valve 16 is spaced from the valve seat 14 by a clearance CL and forms, together with the valve seat 14, a flow path of the mixture liquid M. The position of the valve 16 can be changed with respect to the valve seat 14, and changing the position of the valve 16 changes the clearance CL, or in other words, the cross-sectional area of the flow path of the mixture liquid M. In the following, the size of the clearance CL will be referred to as a valve opening degree.

Fig. 2A illustrates the valve-type homogenizer 6 adjusted to a first valve opening degree. Fig. 2B illustrates the valve-type homogenizer 6 adjusted to a second valve opening degree, which is narrower than the first valve opening degree. The change in the position of the valve 16, i.e., the valve opening degree of the valve-type homogenizer 6, is controlled by the control unit 12. The mixture liquid M supplied from the tank 2 passes through the valve seat 14 via the through hole 14a and through the gap between the valve seat 14 and the valve 16 and then is sent to the flow path switching valve 10 side.

Using the production device 1 described above, a method for producing the carbon nanotube dispersion liquid D according to the present embodiment is implemented. In this production method, first, a first process is performed in which the mixture liquid M is made to pass through the valve-type homogenizer 6 in which the clearance CL between the valve 16 and the valve seat 14 is adjusted to the first valve opening degree. In the first process, a first shear force is applied to the mixture liquid M passing through the valve-type homogenizer 6. After the first process is performed, a second process is performed in which the mixture liquid M subjected to the first process is made to pass through the valve-type homogenizer 6 adjusted to the second valve opening degree. In the second process, a second shear force, which is greater than the first shear force, is applied to the mixture liquid M passing through the valve-type homogenizer 6.

That is, in the method for producing the carbon nanotube dispersion liquid D according to the present embodiment, a relatively weak shear force is first applied to the carbon nanotubes aggregated in the mixture liquid M to defibrate the carbon nanotubes, and, after the defibration proceeds to some extent, a relatively strong shear force is applied to further defibrate the carbon nanotubes. This prevents the carbon nanotubes from being cut during the defibration, and a decrease in aspect ratio of the carbon nanotubes can be suppressed.

As an example, the control unit 12 sets the connection destination of the valve-type homogenizer 6 to the tank 2 until the first process for the mixture liquid M stored in the tank 2 is completed. Accordingly, the mixture liquid M subjected to the first process is returned from the valve-type homogenizer 6 to the tank 2. After the completion of the first process, the control unit 12 adjusts the valve opening degree of the valve-type homogenizer 6 to the second valve opening degree and switches the connection destination of the valve-type homogenizer 6 to the downstream device.

The mixture liquid M returned to the tank 2 is again supplied to the valve-type homogenizer 6 for the second process. Thus, the carbon nanotube dispersion liquid D is produced. The carbon nanotube dispersion liquid D thus obtained is sent to the downstream device via the flow path switching valve 10. The timing of switching from the first process to the second process can be determined based on the time calculated from the amount of the mixture liquid M stored in the tank 2 and the amount of liquid sent by the pump 4, for example. Also, the number of times the mixture liquid M is made to pass through the valve-type homogenizer 6 (the number of times the mixture liquid M is circulated) in each of the first process and the second process can be appropriately set based on the degree of aggregation of the carbon nanotubes in the mixture liquid M, the magnitude of the shear force applied to the mixture liquid M in each process, and the like.

With the production device 1 of the present embodiment, by circulating the mixture liquid M through a single valve-type homogenizer 6, the first process and the second process can be performed in the valve-type homogenizer 6. Therefore, compared to the case of producing the carbon nanotube dispersion liquid D using a valve-type homogenizer 6 for the first process and a valve-type homogenizer 6 for the second process, the production device 1 can be downsized. However, also by using a production device that includes a valve-type homogenizer 6 for the first process and a valve-type homogenizer 6 for the second process separately, the carbon nanotube dispersion liquid D according to the present embodiment can be produced.

The valve opening degree of the valve-type homogenizer 6 may be changed during each process. For example, the first valve opening degree is an opening degree at which first pressure is applied to the mixture liquid M passing through the valve-type homogenizer 6. The second valve opening degree is an opening degree at which second pressure, which is higher than the first pressure, is applied to the mixture liquid M passing through the valve-type homogenizer 6. The first pressure is pressure at which the first shear force is applied to the mixture liquid M, and the second pressure is pressure at which the second shear force is applied to the mixture liquid M. When the aggregated carbon nanotubes are dispersed, the viscosity of the mixture liquid M changes. When the viscosity of the mixture liquid M changes, the pressure of the mixture liquid M passing through the valve-type homogenizer 6 also changes. Therefore, the first valve opening degree may be fine-tuned so that the first pressure is maintained during the first process. Also, the second valve opening degree may be fine-tuned so that the second pressure is maintained during the second process. The adjustment of the valve opening degree can be performed such that the control unit 12 acquires the pressure of the mixture liquid M from the sensor 8 and adjusts the position of the valve 16 according to the pressure thus acquired.

The second pressure may suitably be 2 to 10 times the first pressure. As an example, the first pressure may be 5 MPa, and the second pressure may be 50 MPa. As another example, the first pressure may be 25 MPa, and the second pressure may be 50 MPa. Also, the valve opening degree may be narrowed in multiple stages of three or more stages. For example, after the first process and the second process, a third process may be performed. In the third process, the valve-type homogenizer 6 is adjusted to a third valve opening degree, which is narrower than the second valve opening degree. The third valve opening degree is an opening degree at which third pressure, which is higher than the second pressure, is applied to the mixture liquid M passing through the valve-type homogenizer 6. In this case, as an example, the first pressure may be 5 MPa, the second pressure may be 25 MPa, and the third pressure may be 50 MPa. The number of stages for the valve opening degree adjustment (the number of processes) or the pressure applied to the mixture liquid M during each process may be determined based on the degree of aggregation of the carbon nanotubes in the mixture liquid M or the like.

The carbon nanotube dispersion liquid D produced using the production method described above is mixed with a negative electrode active material. Thus, a negative electrode mixture for a secondary battery can be obtained. For the negative electrode active material, a publicly-known material capable of occluding and releasing lithium ions can be used, such as silicon-based particles and graphite for a lithium-ion battery. The negative electrode mixture also contains, besides the negative electrode active material, a conductive material, a binding agent, and the like. Carbon nanotubes are used as the conductive material. In the negative electrode mixture in which the carbon nanotube dispersion liquid D according to the present embodiment is mixed, carbon nanotubes of which a decrease in aspect ratio is suppressed are uniformly dispersed. Therefore, even when the secondary battery is repeatedly charged and discharged, conductive paths in the negative electrode can be maintained easily.

Thus, by using the negative electrode mixture for the negative electrode of a secondary battery, the cycle characteristics of the secondary battery can be improved. For example, with a secondary battery using the carbon nanotube dispersion liquid D obtained based on the production method according to the present embodiment, in which the proportion of silicon-based particles used as the negative electrode active material is high, the battery capacity after charging and discharging is repeated for 100 cycles can be improved by 50 or more, compared to a secondary battery using a carbon nanotube dispersion liquid D produced with a constant shear force applied to the mixture liquid M.

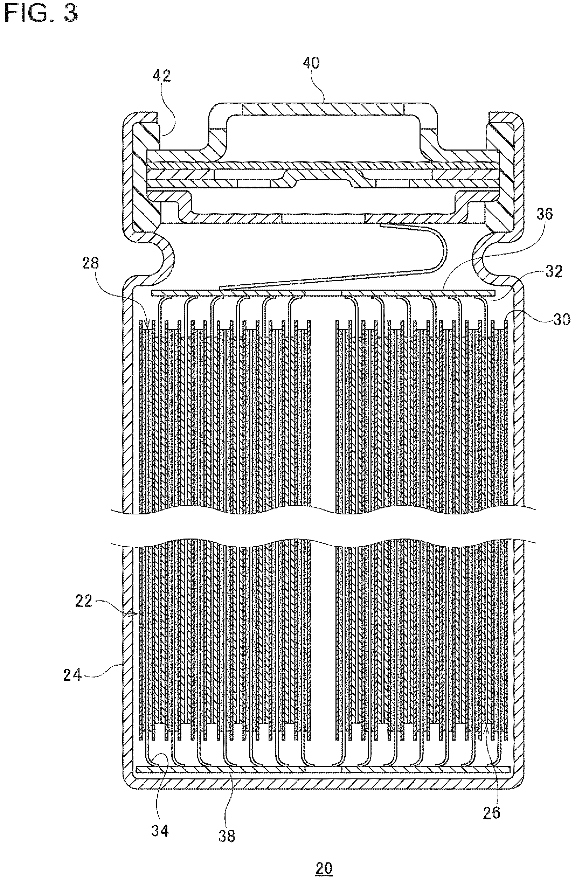

Fig. 3 is a sectional view of a secondary battery 20. Examples of the secondary battery 20 include lithium-based batteries, such as lithium-ion batteries and lithium secondary batteries. The secondary battery 20 has a publicly-known structure. The secondary battery 20 as an example has a structure in which an electrode group 22 is housed together with a non-aqueous electrolyte (not illustrated) in an exterior can 24. The electrode group 22 is cylindrical, for example, and has a wound structure in which a positive electrode 26 of band shape and a negative electrode 28 of band shape are laminated, with a separator 30 of band shape provided therebetween, and wound in a spiral shape.

The positive electrode 26 has a structure in which a positive electrode mixture layer is laminated onto a positive current collector. The positive current collector is constituted by aluminum foil or the like. The positive electrode mixture layer can be formed by applying a positive electrode mixture to a surface of the positive current collector using a publicly-known coating device and by drying and rolling the positive electrode mixture. The positive electrode mixture is obtained by kneading materials, such as a positive electrode active material, a binding agent, and a conductive material, into a dispersion medium so that the materials are dispersed uniformly. The positive electrode active material may be, for example, a composite oxide containing lithium and a transition metal other than lithium. The negative electrode 28 has a structure in which a negative electrode mixture layer is laminated onto a negative current collector. The negative current collector is constituted by copper foil or the like. The negative electrode mixture layer can be formed by applying the negative electrode mixture described above to a surface of the negative current collector using a publicly-known coating device and by drying and rolling the negative electrode mixture.

The positive electrode 26 has a first unapplied portion 32 on which the positive electrode mixture is not applied, at one end of a width direction, which is a direction intersecting a longitudinal direction of the band. Also, the negative electrode 28 has a second unapplied portion 34 on which the negative electrode mixture is not applied, at the other end of the width direction. The separator 30 is a porous sheet having ion permeability and insulation properties. On the side where the first unapplied portion 32 protrudes in the electrode group 22, a positive current collector plate 36 is disposed. The positive current collector plate 36 may be made of aluminum, for example. To the positive current collector plate 36, the first unapplied portion 32 is joined. On the side where the second unapplied portion 34 protrudes in the electrode group 22, a negative current collector plate 38 is disposed. The negative current collector plate 38 may be made of copper or nickel, for example. To the negative current collector plate 38, the second unapplied portion 34 is joined.

The electrode group 22 with the positive current collector plate 36 and the negative current collector plate 38 joined thereto is housed together with a non-aqueous electrolyte in the exterior can 24 of bottomed cylindrical shape. The non-aqueous electrolyte may be constituted by a publicly-known material having lithium ion conductivity. The exterior can 24 may be made of copper, nickel, iron, or an alloy thereof, for example. The negative current collector plate 38 is joined to an inner bottom surface of the exterior can 24 by welding or the like. The positive current collector plate 36 is joined, by welding or the like, to a sealing plate 40 made of metal similar to the exterior can 24. The sealing plate 40 is fitted into an opening of the exterior can 24 via an insulating gasket 42. Accordingly, the electrode group 22 and the non-aqueous electrolyte are sealed inside the exterior can 24, obtaining the secondary battery 20.

As described above, the method for producing the carbon nanotube dispersion liquid D according to the present embodiment includes performing the first process of allowing the carbon nanotube mixture liquid M to pass through the valve-type homogenizer 6 adjusted to the first valve opening degree, and performing the second process of allowing the mixture liquid M that has been subjected to the first process to pass through the valve-type homogenizer 6 adjusted to the second valve opening degree narrower than the first valve opening degree. By narrowing the valve opening degree in stages in this way, the carbon nanotubes can be defibrated by weak shear when the degree of aggregation of the carbon nanotubes is large, and, after the defibration proceeds to some extent and the clumps of the carbon nanotubes become smaller, the carbon nanotubes can be defibrated by strong shear. Therefore, the carbon nanotube dispersion liquid D in which carbon nanotubes with high aspect ratios are uniformly dispersed can be obtained.

Also, with the valve-type homogenizer 6, the shear force applied to the mixture liquid M can be easily adjusted, compared to a nozzle-type homogenizer. Therefore, switching between the first process and the second process can be easily performed. In addition, both processes can be performed with a single valve-type homogenizer 6. Further, the valve-type homogenizer 6 enables feedback control of detecting the pressure applied to the mixture and fine-tuning the valve opening degree. Such feedback control can stabilize the shear force applied to the mixture liquid M in each process. Therefore, a dispersion liquid of carbon nanotubes with high aspect ratios can be produced more easily.

Also, the valve-type homogenizer 6 has a higher processing speed than a nozzle-type homogenizer. Further, even if clogging with the mixed liquid M occurs during processing, the clogging can be cleared by changing the position of the valve 16. Accordingly, the maintenance is easier than that of a nozzle-type homogenizer. Therefore, using the valve-type homogenizer 6 can increase the productivity of the carbon nanotube dispersion liquid D.

Also, by using the negative electrode mixture in which the carbon nanotube dispersion liquid D of the present embodiment is mixed, the cycle characteristics of the secondary battery 20 can be improved. In a lithium-based battery, such as a lithium-ion battery or a lithium secondary battery, the volume of the negative electrode mixture layer tends to expand and contract significantly during charging and discharging. Accordingly, when charging and discharging is repeated, conductive paths in the negative electrode mixture layer are gradually lost. In contrast, by dispersing carbon nanotubes with high aspect ratios in the negative electrode mixture, conductive paths in the negative electrode mixture layer can be easily maintained even after the charging and discharging is repeated. Therefore, the cycle characteristics of the secondary battery 20 can be improved.

An embodiment of the present disclosure has been described in detail. The abovementioned embodiment merely describes a specific example for carrying out the present disclosure. The embodiment is not intended to limit the technical scope of the present disclosure, and various design modifications, including changes, addition, and deletion of constituting elements, may be made to the embodiment without departing from the spirit of the present disclosure defined in the claims. Such an additional embodiment with a design modification added has the effect of each of the combined embodiments and modifications. In the aforementioned embodiment, matters to which design modifications may be made are emphasized with the expression of "of the present embodiment", "in the present embodiment", or the like. However, design modifications may also be made to matters without such expression. Optional combinations of constituting elements included in each embodiment may also be employed as additional aspects of the present disclosure. Further, the hatching provided on the cross sections in the drawings does not limit the materials of the objects with the hatching.

The embodiment may be defined by the following Items.

### Item 1

A method for producing a carbon nanotube dispersion liquid (D), the method including performing:
a first process of allowing a mixture liquid (M) of a carbon nanotube and a solvent to pass through a valve-type homogenizer (6) adjusted to a first valve opening degree; and
a second process of allowing the mixture liquid (M) that has been subjected to the first process to pass through a valve-type homogenizer (6) adjusted to a second valve opening degree narrower than the first valve opening degree.

### Item 2

The method for producing a carbon nanotube dispersion liquid (D) according to Item 1, further including circulating the mixture liquid (M) through one said valve-type homogenizer (6) and performing the first process and the second process in said valve-type homogenizer (6).

### Item 3

The method for producing a carbon nanotube dispersion liquid (D) according to Item 1 or 2,
wherein the first valve opening degree is an opening degree at which first pressure is applied to the mixture liquid (M) passing through said valve-type homogenizer (6), and
wherein the second valve opening degree is an opening degree at which second pressure higher than the first pressure is applied to the mixture liquid (M) passing through said valve-type homogenizer (6),
the method further including detecting pressure applied to a mixture liquid (M) passing through said valve-type homogenizer (6) and adjusting the valve opening degree according to the pressure.

### Item 4

A negative electrode mixture for a secondary battery (20), the negative electrode mixture including:
a negative electrode active material; and
a carbon nanotube dispersion liquid (D) produced using the method for producing a carbon nanotube dispersion liquid (D) according to any one of Items 1 through 3.

### Item 5

A secondary battery (20), including
a negative electrode (28) that includes the negative electrode mixture for a secondary battery (20) according to Item 4.

### Item 6

A production device (1) for a carbon nanotube dispersion liquid (D), the production device (1) including:
a valve-type homogenizer (6) of which a valve opening degree can be varied; and
a control unit (12) that controls the valve opening degree,
wherein the control unit (12) performs: a first process of adjusting a valve-type homogenizer (6) to a first valve opening degree and allowing a mixture liquid (M) of a carbon nanotube and a solvent to pass through the valve-type homogenizer (6); and a second process of adjusting a valve-type homogenizer (6) to a second valve opening degree narrower than the first valve opening degree and allowing the mixture liquid (M) that has been subjected to the first process to pass through the valve-type homogenizer (6).

### Item 7

The production device (1) for a carbon nanotube dispersion liquid (D) according to Item 6, wherein the mixture liquid (M) is circulated through a single valve-type homogenizer (6), and the first process and the second process are performed in the valve-type homogenizer (6).

### Item 8

The production device (1) for a carbon nanotube dispersion liquid (D) according to Item 6 or 7,
wherein the first valve opening degree is an opening degree at which first pressure is applied to the mixture liquid (M) passing through the valve-type homogenizer (6), and
wherein the second valve opening degree is an opening degree at which second pressure, which is higher than the first pressure, is applied to the mixture liquid (M) passing through the valve-type homogenizer (6),
the production device (1) including a sensor (8) that detects pressure applied to the mixture liquid (M) passing through the valve-type homogenizer (6),
wherein the control unit (12) adjusts the valve opening degree according to the pressure detected by the sensor (8).

### INDUSTRIAL APPLICABILITY

The present disclosure is applicable to methods for producing carbon nanotube dispersion liquids, negative electrode mixtures for secondary batteries, and secondary batteries.

### REFERENCE SIGNS LIST

6 valve-type homogenizer, 12 control unit, 16 valve, 20 secondary battery, 28 negative electrode, D carbon nanotube dispersion liquid, M mixture liquid

## Claims

1. A method for producing a carbon nanotube dispersion liquid, the method comprising performing:
a first process of allowing a mixture liquid of a carbon nanotube and a solvent to pass through a valve-type homogenizer adjusted to a first valve opening degree; and
a second process of allowing the mixture liquid that has been subjected to the first process to pass through a valve-type homogenizer adjusted to a second valve opening degree narrower than the first valve opening degree.

2. The method for producing a carbon nanotube dispersion liquid according to Claim 1, further comprising circulating the mixture liquid through one said valve-type homogenizer and performing the first process and the second process in said valve-type homogenizer.

3. The method for producing a carbon nanotube dispersion liquid according to Claim 1 or 2,
wherein the first valve opening degree is an opening degree at which first pressure is applied to the mixture liquid passing through said valve-type homogenizer, and
wherein the second valve opening degree is an opening degree at which second pressure higher than the first pressure is applied to the mixture liquid passing through said valve-type homogenizer,
the method further comprising detecting pressure applied to a mixture liquid passing through said valve-type homogenizer and adjusting the valve opening degree according to the pressure.

4. A negative electrode mixture for a secondary battery, the negative electrode mixture comprising:
a negative electrode active material; and
a carbon nanotube dispersion liquid produced using the method for producing a carbon nanotube dispersion liquid according to any one of Claims 1 through 3.

5. A secondary battery, comprising
a negative electrode that comprises the negative electrode mixture for a secondary battery according to Claim 4.
